# EUROPEAN PATENT SPECIFICATION

(11) **EP 0 562 324 B1**
(45) Date of publication and mention of the grant of the patent: **12.11.1997**
(21) Application number: 93103459.9
(22) Date of filing: 04.03.1993
(51) Int. Cl.: E06B 1/60, F16B 5/02

(54) **Adjustable spacer for installing door and window frames**
Einstellbarer Abstandhalter für den Einbau von Tür- und Fensterrahmen
Pièce d'espacement adjustable pour l'installation de cadres de portes ou fenêtres

(30) Priority: 27.03.1992 IT MI920743
(43) Date of publication of application: 29.09.1993
(73) Proprietor: Proni, Alberto, 40055 Villanova di Castenaso (Bologna) (IT)
(72) Inventor: Proni, Alberto, 40055 Villanova di Castenaso (Bologna) (IT)
(74) Representative: Rapisardi, Mariacristina

(56) References cited:
- EP-A- 0 196 485
- CH-A- 262 504
- DE-A- 3 310 321
- FR-A- 1 316 651
- LU-A- 86 872
- US-A- 4 888 924

## Description

The present invention relates to an adjustable spacer for installing door- and window-frames.

As is known, aluminum door- and window-frames are normally installed by fixing the external frame of the door- and window-frame, also known as counter-frame, on a metallic frame included in the masonry beforehand. The current method of installing door- and window-frames recommends to build the counter-frame, which may be made of aluminum or PVC, with sizes which are slightly smaller than those of the metallic frame included in the masonry.

Accordingly, the counter-frame can be applied to the metallic frame in an extremely simple and rapid manner by virtue of the interposition of adjustable spacers, one for each screw for fixing the counter-frame to the frame, which can recover the play between these two frames.

The profiles of the counter-frames, especially if they are made of aluminum, are formed by a basic tubular member from which a plurality of wings extend, characterizing the profile.

The basic tubular member can be open or closed.

In the case of an open basic tubular member, one normally uses adjustable spacers which are inserted longitudinally and screw-fixed or positioned by friction, or spacers which are inserted frontally and locked inside the basic tubular member by means of the rotation of the spacer itself.

In the case of counter-frames built with closed basic tubular member profiles, the adjustable spacers, which are of various kinds according to the requirements and the characteristics of the counter-frame, are inserted frontally with an oscillating motion, with the grub screw necessarily only initially screwed in; or, in another type of spacer, they are inserted with the grub screw completely screwed and by snap-fixing the grub screw on the wings of the profile which are external to the basic tubular member; or they are inserted frontally and anchored laterally.

In other words, all adjustable spacers for counter-frames built with profiles constituted by a closed basic tubular member use, for their mounting, wings which according to their shape, position and size condition the type and possibility of application of the spacer.

From the above description it can be easily understood that, among other drawbacks, current adjustable spacers can be applied on profiled elements made of aluminum or PVC only depending on the position of the external wings and on the thickness of the walls of the basic tubular member.

LU-A-86872 discloses an adjustable spacer for installing door - and window - frames as defined in the pre-characterising part of claim 1. Said spacer does not have the characteristics disclosed in the characterizing part of claim 1.

The aim of the present invention is to eliminate the above described drawbacks of the known art.

Within the scope of this aim, an important object of the invention is to provide an adjustable spacer for installing door- and window-frames which can be applied to such door- and window-frames frontally with the grub screw completely screwed in, regardless of the presence or absence of the wings on the profiled element.

Another object of the invention is to provide an-adjustable spacer for installing door- and window-frames which can be applied indifferently on counter-frames made of aluminum or PVC, regardless of the thickness of the walls of the basic tubular member, this last characteristic being very useful especially in the case of profiled elements made of PVC.

Another object of the invention is to provide an adjustable spacer for installing door- and window-frames which can be applied on any type of profiled element of any size and shape both in the presence and in the absence of wings.

This aim, these objects and others are achieved by an adjustable spacer for installing door- and window-frames, which includes a body which engages a portion of a profiled element and a grub screw which is connected to the body so that it can rotate, characterized in that the body is provided with a means for connection to a hole formed in the profiled element portion.

Further characteristics and advantages of the invention will become apparent from the description of a preferred but not exclusive embodiment of the adjustable spacer for installing door- and window-frames according to the invention, illustrated only by way of non-limitative example in the accompanying drawings, wherein:
Figure 1 is a lateral elevation view of the adjustable spacer according to the invention;
Figure 2 is a sectional view taken along the plane II-II of figure 1 according to the invention;
Figure 3 is a plan view of the spacer according to the invention;

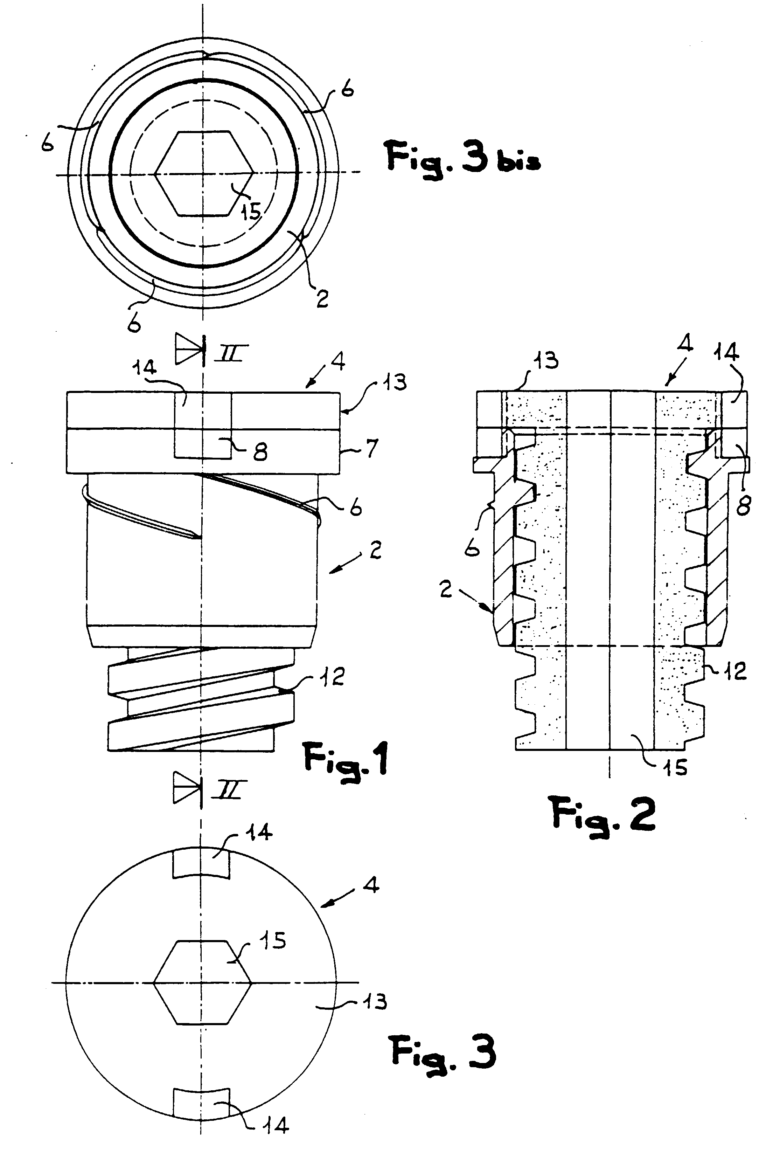

Figure 3 bis is a bottom view of the spacer according to the invention;

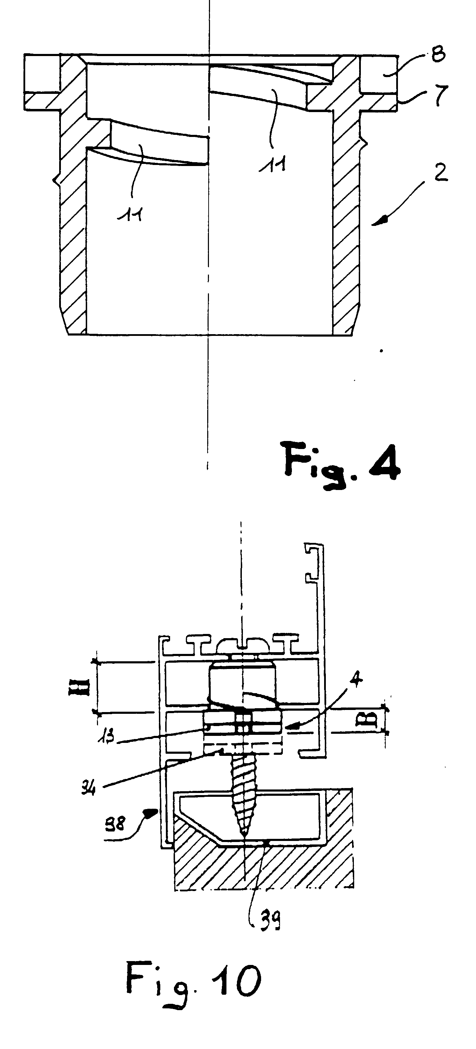

Figure 4 is a transversely sectional lateral elevation view of the body of the spacer according to the invention;

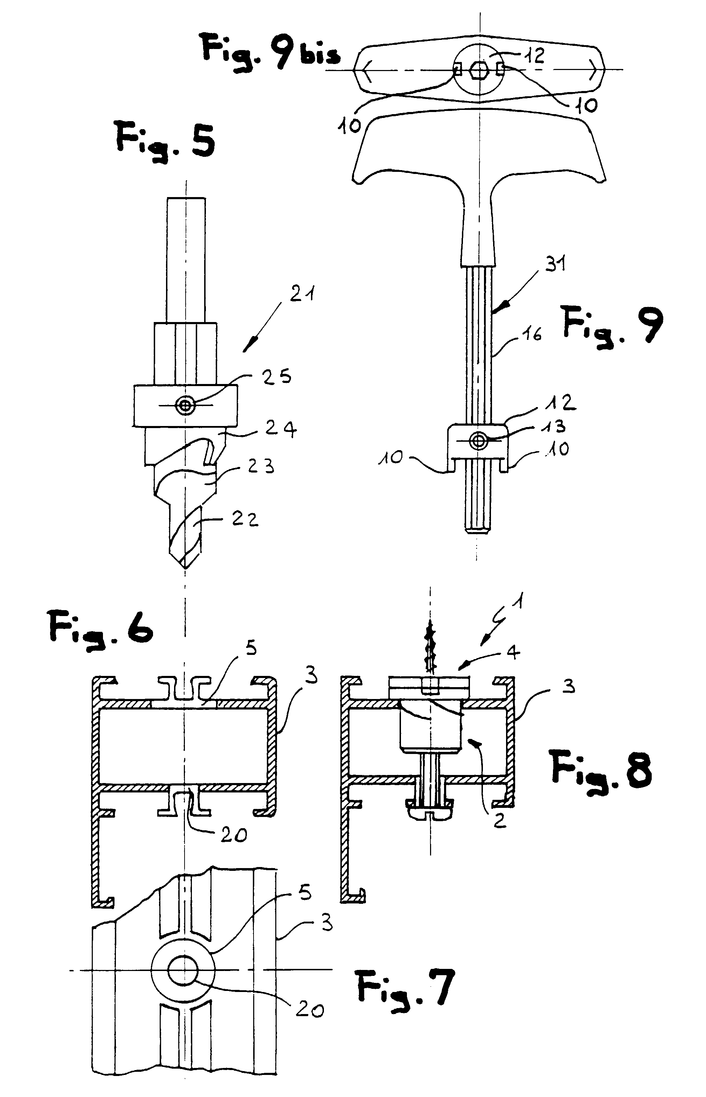

Figure 5 is a view of the particular tool by means of which it is possible, with a simple drilling operation, to form the seats in which the spacer according to the invention will engage;
Figure 6 is a transversely sectional view of a profiled element after the drilling operation according to the invention;
Figure 7 is a plan view of the profiled element shown in Figure 6;
Figure 8 is a view of the insertion of the spacer in the profiled element of Figure 6, without the aid of the wings eliminated by the drilling operation;
Figure 9 is a schematic view of the wrench which can be used to insert the spacer in the corresponding hole of the profiled element;

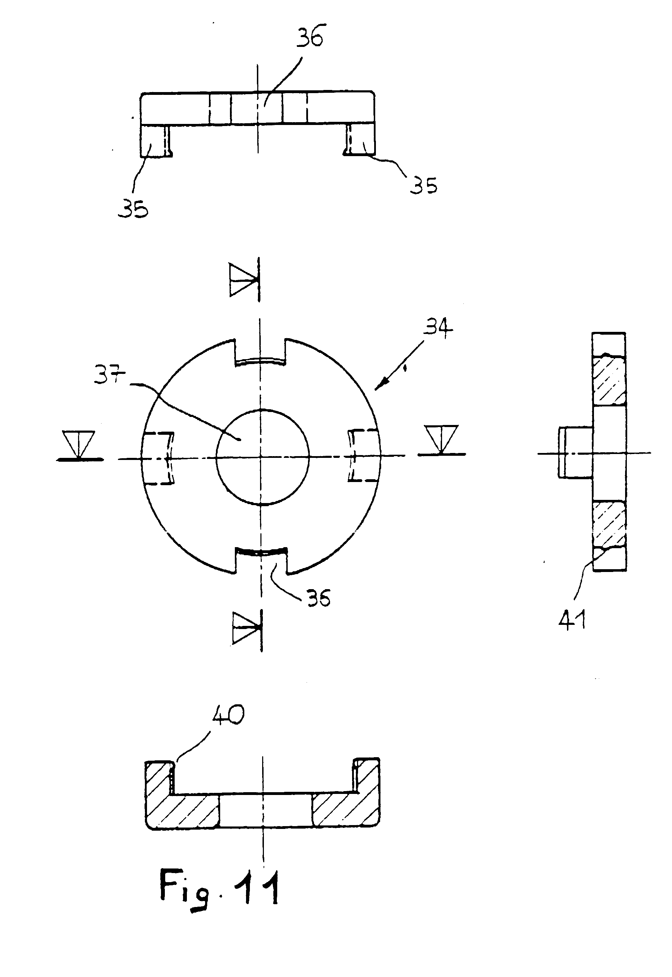

Figure 10 is a view of the application of one or more shims applied to the head of the grub screw;
Figure 11 is a plan and lateral elevation view of a shim with the related cross-sections;

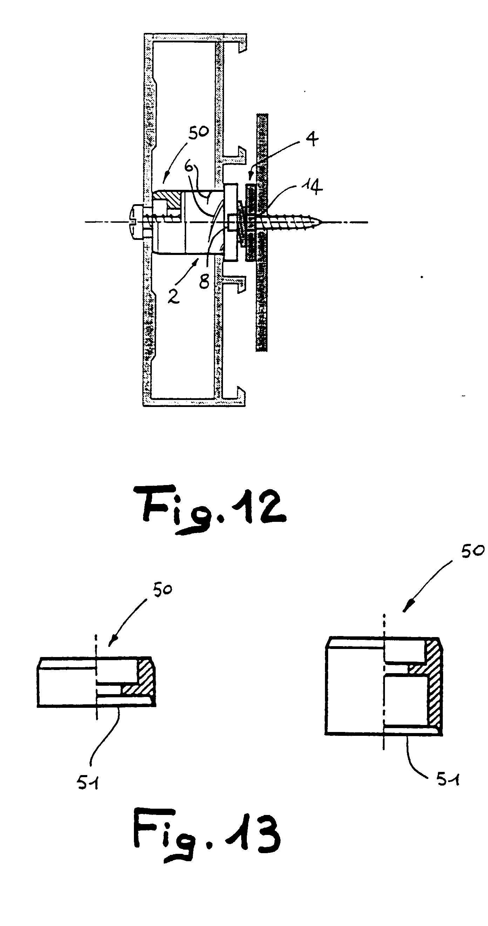

Figure 12 is a sectional view of the application of a contrast shim according to the invention; and
Figure 13 is a partially sectional view of two different contrast shims.

With reference to the above described figures, the adjustable spacer for installing door- and window-frames, generally designated by the reference numeral 1, comprises a body 2 and a grub screw 4 which is connected thereto so that it can rotate.

More precisely, the body 2 is provided with a connection means which engages a hole 5, formed on a profiled element 3 for example with an appropriate tool which is also the subject of the present invention; the means is suitable to make the body 2 move coaxially to the hole 5 when it is turned about its own axis.

More precisely, the connection means comprises at least one ridge and particularly three helical ridges 6 which self-thread, during the rotation of the body 2, on the edge of the hole 5.

Advantageously, the ends of the ridges 6 which are opposite to the collar 7 of the body 2 are tapered, so that their crest protrudes therefrom progressively, so as to engage, in an equally progressive manner, inside the material which forms the profiled element and thus the edge of the hole 5.

Each one of the ridges 6 extends from the collar 7 provided on the body 2; since it has a greater diameter, the collar abuts against the profiled element portion on which the hole 5 is formed.

The collar 7 has two first seats 8 (figure 4) which are diametrically mutually opposite and are suitable to engage respective teeth 10 of an actuation wrench 31 for keying the spacer according to the invention on the profiled element.

In particular, as can be seen in Figure 9, the teeth 10 are formed on a block 12 which can slide and can be locked, by means of an Allen screw 13, in any position of the wrench 31.

The body 2 is furthermore internally provided with at least one turn of a male thread 11 which is suitable to engage the corresponding female thread 12 of the grub screw 4.

The grub screw 4 furthermore has a head 13 whose diameter is substantially equal to that of the collar 7 and is also provided with two second seats 14 which are substantially equal to the first seats 8 and coincide with these last when the grub screw is completely screwed inside the body 2, as can be seen for example in Figure 2.

The grub screw 4 is furthermore provided with a channel 15 (which in this case has a hexagonal cross-section) which extends axially inside it and with which the stem 16 of the wrench 31 engages.

Conveniently, furthermore, the body 2 is made of a sufficiently hard material, for example a Zn + Al + Mg alloy, so as to effectively bite into the profiled element which is meant to receive it at the hole 5 during its penetration therein.

On the other hand, the grub screw 4 is instead made for example of nylon.

Due to the different mechanical strength of the two materials which constitute the body 2 and the grub screw 4, in order to obtain the maximum strength of the coupling, the axial thickness of the thread 12 of the grub screw 4 is as much as possible greater than that of the thread 11 of the body 2, as clearly shown in Figure 2.

Furthermore, advantageously, the Zn + Al + Mg alloy body 2 can be obtained by injection-casting by virtue of the particular execution of the threads 11.

Conveniently, as shown in Figures 5, 6, 7 and 8, the hole 5 and the opposite hole 20 on the same profiled element 3 are formed by means of a drilling bit generally designated by the reference numeral 21.

The bit 21 has a first diameter 22 and a second diameter 23, each of which has first and second cutting edges.

An annular mill 24 is furthermore provided on the bit 21 and can be positioned along the bit 21 and fixed to it for example by means of an Allen screw 25.

The position of the annular mill 24 depends on the dimensions of the tubular member which constitutes the profiled element 3 and on the height of the wings 26.

With a double-diameter bit thus equipped it is possible, with a single drilling operation, to obtain two holes of different diameter and to remove, as shown in Figure 7, any wing all around the hole 5, so as to allow the engagement of the collar 7 with the tubular wall of the profiled element.

When the dimension H of the basic tubular member of the profiled element 38 is equal to the length of the body of the spacer, the spacer must be equipped with a threaded grub screw 4 which does not protrude from the body of the spacer.

If, at the same time, the size of the profiled element is greater than the size B of the spacer, it might happen that the adjustment stroke of the grub screw is not sufficient to recover the play between the counter-frame of the door- and window-frame 38 and the pre-walled metallic frame 39.

In order to obviate this problem, a shim 34 (in this case made of nylon) has been provided, Figure 11, which has tabs 35 (dimensionally equal to the tabs 10 of the wrench, Figure 9) provided with the protrusion 40 and corresponding right-angled seats 36 (identical to the seats 14 of the grub screw 4 of Figure 1) provided with the protrusion 41 which, when superimposed with a snap action on the head 13 of the threaded grub screw (in one or more units, according to the requirements), reduces the play between the counter-frame 38 and the frame 39, allowing the adjustment stroke to be always adequate.

In the same manner, when the fixing screw affects a profile which has a tubular member with a very wide base, or when, in thermally insulating profiles, the fixing screw affects the polyamide joint, contrast shims 50 are required to ensure that the pressure applied by the head of the fixing screw does not deform the profiled element and prevents its rigid locking.

The contrast shims 50 can have different heights and are inserted by slight forcing in the assembly wrench until they adhere to the body 2 by means of the seat 51.

Once assembly has been performed, the spacer, engaged on the profile, retains the shims perfectly in position.

The working of the spacer according to the invention is evident from what has been described and illustrated, i.e. with reference to Figures 5, 6, 7 and 8; with a bit 21 provided with an annular mill 24, the holes 5 and 20 are formed and the wings around the hole 5 are removed with a single operation.

The wrench 31 is inserted in the grub screw 4, which is completely screwed on the body 2, until the teeth 10 of the block 12 engage the seats 8 of the Zn + Al + Mg alloy body through the seats 14 of the grub screw 4.

Then the spacer is inserted in the hole 5 of the profiled element 3 until, by applying an adequate axial pressure and by turning the wrench 31 through approximately half a turn counterclockwise, the collar 7 of the spacer body locks on the tubular wall of the profiled element by virtue of the helical engagement of the three ridges 6.
Conveniently, the helical ridges 6 are shaped like left-handed screws, i.e. they screw onto the profile by means of a counterclockwise rotation, and this is done in order to ensure that the unscrewing of the grub screw 4 may act on the body 2 only so as to screw it in, thus ensuring the keying of the spacer on the profiled element.

During installation of the door- and window-frame, the wrench 31 is used to unscrew the grub screw 4 and thus recover the play between the counter-frame, made of aluminum, PVC or even wood, and the metallic frame included in the masonry.

In practice it has been observed that the spacer according to the invention is particularly advantageous in that it can be applied frontally on a profiled element by rotation, with the grub screw completely screwed in, regardless of the position and even of the existence of the external wings and independently of the thickness of the walls of the basic tubular member of the door- and window-frame.

In practice, the materials employed, as well as the dimensions, may be any according to the requirements and the state of the art.

Where technical features mentioned in any claim are followed by reference signs, those reference signs have been included for the sole purpose of increasing the intelligibility of the claims and accordingly such reference signs do not have any limiting effect on the scope of each element identified by way of example by such reference signs.

## Claims

1. Adjustable spacer for installing door- and window-frames, which comprises a body (2) which engages a portion of a profiled element (3) and a grub screw (4) which is rotating connected to said body, said body (2) having a means (6) for connecting to a hole (5) formed in said portion of said profiled element (3), characterized in that said connection means comprises at least one helical ridge (6) shaped like left handed screws which self-threads, during said rotation, on the edge of said hole (5), said at least one helical ridge extending from a collar (7) which is present on said body and abuts against said portion of said profiled element and has two diametrically opposite first seats (8) which are suitable to engage respective teeth (10) of a wrench (31) for the actuation of said spacer.

2. Spacer according to claim 1, characterized in that said body (2) is internally provided with only one turn of a male thread (11) which engages the corresponding female thread (12) of said grub screw (4).

3. Spacer according to claim 1, characterized in that said grub screw has a head (13) whose diameter is substantially equal to that of said collar (7) and two mutually diametrically opposite second seats (14) which are identical to said first seats (8) and coincide with them when said grub screw is completely screwed in said body (2).

4. Spacer according to claim 1, characterized in that said grub screw is axially provided with a channel (15) inside which said wrench (31) engages.

5. Spacer according to one of the preceding claims, characterized in that said body (2), said helical ridge (6) and said thread (11) are obtained simultaneously by casting.

6. Spacer according to claim 1, characterized in that said body is made of a Zn + Al + Mg alloy.

7. Set for installing door - and window - frames, comprising an adjustable spacer as claimed in any one of claims 1 to 6 characterized in that it comprises a drilling bit for forming the hole (5) in the profiled element (3) said drilling bit (21) being provided with a first diameter (22) and with a second diameter (23) which are respectively provided with first and second cutting edges and with at least one annular mill (24) which can be slidingly adjusted at preset distance from the end of said bit.

8. Set according to claim 7, characterized in that said first cutting edges of said bit are suitable to form, in said profiled element, an opening for the passage of a screw for fixing said profiled element to a counter-frame, said second cutting edges are suitable to form said hole in which said body engages, and said mill is suitable to remove any wings of said profiled element circumferentially with respect to said hole.

9. Set according to claim 7 characterized in that it comprises at least one shim (34) provided with two tabs (35), each tab being provided with a first protrusion (40) and with corresponding right-angled seats (36), each of which is provided with a second protrusion (41).

10. Set according to claim 7 characterized in that it comprises at least one contrast shim (50) which can be inserted in said wrench and can be associated with said body by means of an appropriate seat (51) to avoid the deformation of profiled elements having tubular members with a wide base or thermally insulating profiled elements.

## Patentansprüche

1. Einstellbarer Abstandshalter zum Einbauen von Tür- und Fensterrahmen, welcher einen Körper (2) aufweist, der mit einem Abschnitt eines Profilelements (3) und einer Grabschraube (4) in Eingriff ist, die sich verbunden mit dem Körper dreht, wobei der Körper (2) ein Mittel (6) zum Verbinden mit einem in dem Abschnitt des Profilelements (3) gebildeten Loch (5) hat, dadurch gekennzeichnet, daß das Verbindungsmittel mindestens einen schraubenförmigen Grat (6) hat, der wie linksgängige Schrauben geformt ist und sich während der Drehung an der Kante des Loches (5) selbst ein Gewinde dreht, wobei sich der mindestens eine schraubenförmige Grat von einem Kragen (7) erstreckt, der an dem Körper vorhanden ist, und gegen den Abschnitt des Profilelements stößt und zwei diametral gegenüberliegende erste Sitze (8) hat, die sich für den Eingriff mit jeweiligen Zähnen (10) eines Schraubenschlüssels (31) für die Betätigung des Abstandshalters eignen.

2. Abstandshalter nach Anspruch 1, dadurch gekennzeichnet, daß der Körper (2) im Innern mit nur einer Drehung eines Außengewindes (11) versehen ist, das mit dem entsprechenden Innengewinde (12) der Grabschraube (4) in Eingriff ist.

3. Abstandshalter nach Anspruch 1, dadurch gekennzeichnet, daß die Grabschraube einen Kopf (13), dessen Durchmesser im wesentlichen gleich demjenigen des Kragens (7) ist, und zwei zueinander diametral gegenüberliegende zweite Sitze (14) hat, die mit den ersten Sitzen (8) identisch sind und mit ihnen zusammenfallen, wenn die Grabschraube vollständig in den Körper (2) hineingeschraubt ist.

4. Abstandshalter nach Anspruch 1, dadurch gekennzeichnet, daß die Grabschraube axial mit einem Kanal (15) versehen ist, in dessen Innern der Schraubenschlüssel (31) in Eingriff kommt.

5. Abstandshalter nach einem der vorhergehenden Ansprüche, dadurch gekennzeichnet, daß der Körper (2), der schraubenförmige Grat (6) und das Gewinde (11) gleichzeitig durch Gießen gewonnen werden.

6. Abstandshalter nach Anspruch 1, dadurch gekennzeichnet, daß der Körper aus einer Zn/Al/Mg-Legierung besteht.

7. Satz zum Einbauen von Tür- und Fensterrahmen, welcher einen einstellbaren Abstandshalter nach einem der Ansprüche 1 bis 6 aufweist, dadurch gekennzeichnet, daß er eine Bohrerspitze aufweist, um das Loch (5) in dem Profilelement (3) zu bilden, wobei die Bohrerspitze (21) mit einem ersten Durchmesser (22) und mit einem zweiten Durchmesser (23), die jeweils mit einer ersten und einer zweiten Schneidkante versehen sind, und mit mindestens einer L-förmigen Fräskante (24) versehen ist, die auf eine voreingestellte Entfernung von dem Ende der spitze gleitend eingestellt werden kann.

8. Satz nach Anspruch 7, dadurch gekennzeichnet, daß die ersten Schneidkanten der Spitze geeignet sind, um in dem Profilelement eine Öffnung für das Hindurchtreten einer schraube zum Befestigen des Profilelements an einem Gegenrahmen zu bilden, wobei die zweiten Schneidkanten geeignet sind, das Loch zu bilden, in welchem der Körper eingreift, und daß die Fräskante geeignet ist, Flügel von dem Profilelement in Umfangsrichtung bezüglich des Loches zu entfernen.

9. Satz nach Anspruch 7, dadurch gekennzeichnet, daß er mindestens eine mit zwei Anhängseln (35) versehene Beilagescheibe (34) aufweist, wobei jedes Anhängsel mit einem ersten Vorsprung (40) und mit entsprechenden rechtwinkligen Sitzen (36) versehen ist, von denen jeder mit einem zweiten Vorsprung (41) versehen ist.

10. Satz nach Anspruch 7, dadurch gekennzeichnet, daß er mindestens eine Kontrastbeilage (50) aufweist, die in den Schraubenschlüssel eingefügt und dem Körper mittels eines geeigneten Sitzes (51) zugeordnet werden kann, um die Verformung von Profilelementen zu vermeiden, die rohrförmige Glieder mit einer breiten Basis oder thermisch isolierende Profilelemente haben.

## Revendications

1. Pièce d'écartement réglable pour l'installation de châssis de portes et de fenêtres, comprenant un corps (2) qui s'engage sur une partie d'un élément profilé (3) et une vis sans tête (4) qui est relié par rotation au corps, ce corps (2) comportant un moyen (6) de connexion a un trou (5) formé dans la partie de l'élément profilé (3),
caractérisée en ce que
le moyen de connexion comprend au moins une saillie en hélice (6) formée à la manière d'un filet de vis à gauche qui est auto-vissant, pendant la rotation, dans le bord du trou (5), cette saillie en hélice au moins unique partant d'un collier (7) qui se trouve sur le corps et vient buter contre la partie de l'élément profilé, ce collier comportant deux premiers sièges diamétralement opposés (8) qui servent à recevoir les dents respectives (10) d'une clé (31) destinée à actionner la pièce d'écartement.

2. Pièce d'écartement selon la revendication 1,
caractérisée en ce que
le corps (2) est muni intérieurement d'une seule spire d'un filetage mâle (11) qui s'engage dans le filetage femelle correspondant (12) de la vis sans tête (4).

3. Pièce d'écartement selon la revendication 1,
caractérisée en ce que
la vis sans tête est équipée d'une tête (13) dont le diamètre est essentiellement égal à celui du collier (7), avec deux seconds sièges diamétralement opposés (14) qui sont identiques aux premiers sièges (8) et coincident avec eux lorsque la vis sans tête est complètement vissée dans le corps (2).

4. Pièce d'écartement selon la revendication 1,
caractérisée en ce que
la vis sans tête est munie axialement d'un canal (15) à l'intérieur duquel s'engage la clé (31).

5. Pièce d'écartement selon l'une quelconque des revendications précédentes,
caractérisée en ce que
dans le corps (2), la saillie en hélice (6) et le filetage (11) sont obtenus simultanément par moulage.

6. Pièce d'écartement selon la revendication 1,
caractérisée en ce que
le corps est réalisé dans un alliage de Zn + Al + Mg.

7. Jeu d'installation de châssis de portes et de fenêtres, comprenant la pièce d'écartement réglable selon l'une quelconque des revendications 1 à 6,
caractérisé en ce qu'il comprend :
• un foret pour former le trou (5) dans l'élément profilé (3), ce foret (21) comportant un premier diamètre (22) et un second diamètre (23) munis respectivement d'un premier bord de coupe et d'un second bord de coupe,
• et au moins une fraise annulaire (24) qui peut être réglée en glissement à une distance prédéterminée de l'extrémité du foret.

8. Jeu selon la revendication 7,
caractérisé en ce que
les premiers bords de coupe du foret sont conçus pour former, dans l'élément profilé, une ouverture de passage d'une vis destinée à fixer cet élément profilé à un contrechâssis, les seconds bords de coupe étant conçus pour former le trou dans lequel s'engage le corps, et le foret étant conçu pour retirer toutes ailettes de l'élément profilé, circonférentiellement par rapport au trou.

9. Jeu selon la revendication 7,
caractérisé en ce qu'
il comprend au moins une cale (34) munie de deux pattes (35), chaque patte étant munie d'une première saillie (40) et de sièges à angle droit correspondants (36) munis chacun d'une seconde saillie (41).

10. Jeu selon la revendication 7,
caractérisé en ce qu'
il comprend au moins une cale de contraste (50) qui peut être introduite dans la clé et qui peut être associée avec le corps au moyen d'un siège approprié (51) pour éviter la déformation d'éléments profilés ayant une base large, ou d'éléments profilés thermiquement isolants.
